# EUROPEAN PATENT SPECIFICATION

(11) **EP 3 450 344 B1**
(45) Date of publication and mention of the grant of the patent: **22.07.2020**
(21) Application number: 18187191.4
(22) Date of filing: 03.08.2018
(51) Int. Cl.: B65D 41/12, B21D 51/46, B21D 51/48, B29C 70/80, B29C 43/18, B29C 43/36

(54) **CAP AND METHOD FOR ITS PRODUCTION**
KAPPE UND VERFAHREN ZU DEREN HERSTELLUNG
CAPUCHON ET SON PROCÉDÉ DE PRODUCTION

(30) Priority: 29.08.2017 IT 201700097085
(43) Date of publication of application: 06.03.2019
(73) Proprietor: PELLICONI & C. S.P.A., 40064 Ozzano dell'Emilia (BO) (IT)
(72) Inventor: NALDI, Doriano, 40064 Ozzano Dell'Emilia (Bologna) (IT); WHITE, Steven, Godmanchester, PE29 2JD (GB)
(74) Representative: Milli, Simone

(56) References cited:
- FR-A- 1 452 120
- US-A- 3 038 624
- US-A- 3 958 910
- US-A1- 2015 232 236

## Description

This invention relates to a cap, preferably of the crown type, according to the preamble of claim 1, and a method for its production, according to the preamble of claim 5.

More specifically, this invention relates to a crown cap which can be used in the classic method of production of sparkling wines.

The crown cap, described for the first time in US patent 468.258, is still widely used for closing bottles made of glass.

In its simplest embodiment, the crown cap is formed by a metal capsule which through a manual or pneumatic capping machine is gripped to the neck of the bottle. A disc seal is usually positioned inside the capsule to allow a seal of the cap on the neck of the bottle. The disc seal, initially made of cork, has since the end of the 1960s been made mainly of plastic, in the form of a thin layer adherent to the inner surface of the capsule.

In the document US 2015/0232236 A1 it is disclosed a crown-type metal cap for sealing the mouth of a bottle, preferably aluminium metal bottle. Such cap is formed by a laminar part of circular plan form, including an inner face and an outer face; it is, then, provided peripherally with a closure skirt and, on the inner face, with a closure gasket including a peripheral lip.

The document FR 1452120 A relates to linings for curved or crown caps, characterized by a thin and transparent membrane section and a peripheral sealing zone made of vinyl resin, in such a way as to enable the vision of a text or printed design through the membrane.

In the document US US3958910 A it is shown a plunger for forming thermoplastic material, disposed in a closure shell insert, with a cushion pad or bead by sealing the material between the crown and working surface of the plunger and flexing a portion of the working surface to form the material into the desired shape.

In the document US 3038624 A it is disclosed a cap or closure which fulfils all the purposes of a two-part (crown and gasket) closure but only consists of a single element, which is made of resilient or pliable material and adapted to accomplish an adequate sealing action.

The document FR2792294 discloses a crown cap, according to the preamble of claim 1, suitable to be used in the classic method of production of sparkling wines.

As well as acting as a simple closing element, the crown cap, according to a specific embodiment of this invention, is used in the classic method for the production of sparkling wines.

In this case, instead of the disc seal there is a cup-shaped sealing element, the so-called *"bidule".*

As is known, the classic method, also called the Champenoise method, is a process for the production of sparkling wine which consists in inducing the fermentation in bottles of the wine through the introduction of sugars and selected yeasts.

The harvesting of the grapes provides the base wine, to which, once bottled, yeasts and sugars are added, which induce a first fermentation. The resting in the bottle and the work of the yeasts give rise to the second fermentation, also known as refermentation.

During this process the purpose of the *bidule* is to collect the sediments during the step for refermentation and fining of the wine.

After the rest period comes the so-called "remuage". During this step the bottles are placed on special racks, which keep the necks lower than the bottom of the bottles, and the bottles are continuously turned so as to deposit the sediments of the exhausted yeasts (which have been produced by the refermentation in bottle) inside the *bidule.*

The last step of the process is defined by the pouring off, also referred to as "disgorgement". This step consists in freezing the wine contained in the neck of the bottle and removing the cap with the sediments contained therein.

After the pouring off, the bottle is topped up with good quality wine and sugars, which give the sparkling wine its final organoleptic characteristics. Lastly, the bottle is closed with the traditional mushroom-shaped cork cap, which is in turn retained on the neck of the bottle by a metal cage.

According to the prior art for the production of crown caps provided with *bidule,* the metal capsule and the *bidule* are made separately (the latter by moulding a plastic material), the two parts are coupled together by inserting the *bidule* inside the capsule, and the *bidule* is retained stably in the capsule by means of a plurality of teeth which are made by deforming the capsule after the above-mentioned coupling.

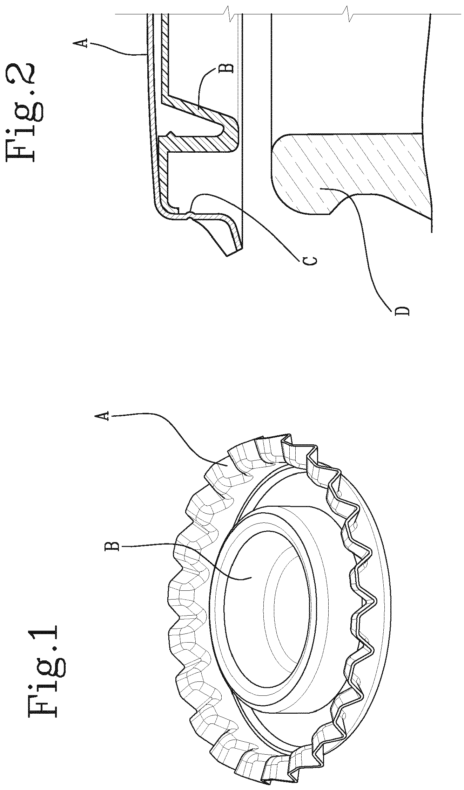

A crown cap obtained according to the technique described above is illustrated in Figures 1 and 2, in which the letter A denotes the metallic capsule, the letter B the *bidule,* the letter C the above-mentioned retaining teeth and the letter D the neck of a bottle.

The production of a crown cap of the type illustrated in Figures 1 and 2 is relatively complex and expensive because it requires various processing steps carried out by respective machines.

The aim of this invention is to provide a crown cap which can be produced on a large scale in a relatively simple and inexpensive manner.

Another aim of the invention is to provide a method for the large-scale production of a crown cap in a relatively simple and inexpensive manner. These aims are fully achieved by the cap and by the method according to this invention, as characterised in the appended claims.

The technical features and advantages of the invention are more apparent in the following description of a preferred but non-limiting embodiment of it. The description refers to the accompanying drawings, which are also provided purely by way of non-limiting example and in which:
- Figure 1 illustrates a crown cap provided with *bidule* according to the prior art;
- Figure 2 illustrates a transversal cross section of the cap of Figure 1 in relation to its coupling with the neck of a bottle;
- Figures 3a and 3b illustrate a sequence of steps for making a crown cap according to this invention;
- Figure 4 illustrates a crown cap obtained following the production steps illustrated in Figures 3a and 3b;
- Figure 5 illustrates a succession of further steps for making a crown cap according to this invention; and
- Figure 6 illustrates a transversal cross section of a crown cap obtained following the production steps illustrated in Figure 5 and in relation to its coupling with the neck of a bottle.

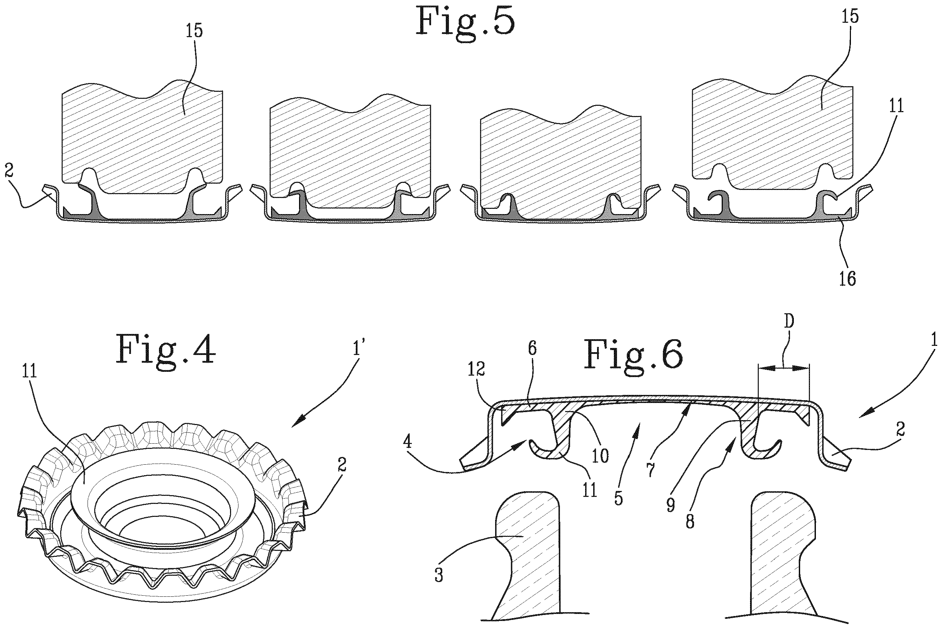

With reference to Figure 6, the numeral 1 denotes a cap, of the crown type, for the fermentation in bottles of sparkling wines.

Preferably, the cap has a series of outer corrugations made on the capsule 2 (which define a crown cap structure).

It should be noted that the invention is not is limited to the caps of the crown type and the cap may be of any type provided it comprises a capsule 2 (preferably made of metal).

The cap 1 comprises a capsule 2 (preferably made of metal) designed to be gripped to the neck 3 of a bottle in known manner, by means of a manual capping machine or pneumatic capping machine (both not illustrated).

The cap 1 also comprises a sealing element 4, which is situated inside the concavity 5 of the capsule 2 and is cup-shaped for collecting the sediments of the wine during the fermentation step in the bottle.

The cup shape of the sealing element 4 performs the function of the so-called *"bidule"* in the context of the classic method for the production of sparkling wines, and has a disc-shaped base 6, adhering to and integral with the bottom 7 of the concavity 5 of the capsule 2, and a annular collar 8, slightly flared, which rises from the base 6 for engaging in a sealed fashion with the neck 3 of the bottle.

The base 6 is substantially circular and has a diameter that approximates the diameter of the bottom 7 of the concavity 5 of the capsule 2.

The collar 8 is defined by a single annular panel 9, that is, by a single annular wall, which rises from the base 6, between a first annular end 10 of the panel 9 which is located on the base 6 and a second annular end 11 of the panel 9 which is located in a position distal from the base 6. More precisely, the first end 10 of the panel 9 extends continuously from the base 6 in a single body, whilst the second end 11 of the panel 9 is free. The collar 8 rises from the base 6 at a predetermined distance D from the outer edge 12 of the base 6. More precisely, the outer surface of the panel 9, which has a substantially circular extension, has the distance D from the outer surface of the base 6, which also has a substantially circular extension.

Preferably, the distance D is between 15% and 50%, more preferably between 20% and 40%, even more preferably between 25% and 30%, of the diameter of the base 6. In order to guarantee both a perfect seal between the collar 8 and the neck 3 of the bottle and a self-centring capacity of the collar 8 inside the neck 3 in the application of the cap 1, the end 11 of the panel 9 faces in the shape of a "U" towards the outer edge 12 of the base 6 and with the concavity facing towards the base 6.

In order to guarantee a firm and stable position of the sealing element 4 inside the concavity 5 of the capsule 2, a layer of paint is interposed between the bottom 7 and the sealing element 4. Preferably, the layer of paint is in the form of adhesive paint.

The sealing element 4 is shaped and constrained on the capsule 2 by inserting and moulding a plastic material directly inside the concavity 5 of the capsule 2, that is to say, on the bottom 7 of the concavity 5 of the capsule 2, after the bottom 7 has been coated with the above-mentioned layer of paint.

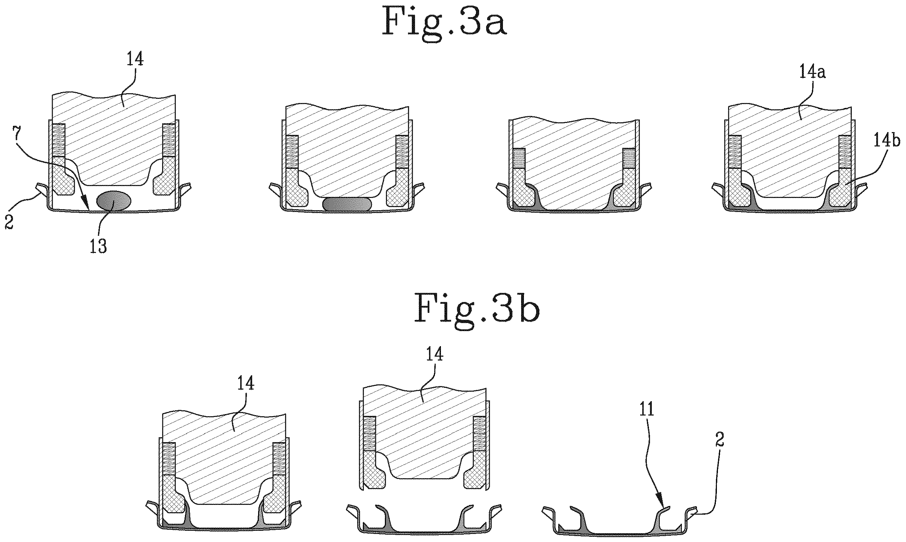

More precisely, the production of the cap 1 comprises the steps of coating the bottom 7 of the concavity 5 of the capsule 2 with a layer of paint, and subsequently, as illustrated in Figures 3a and 3b, positioning (inserting) on the bottom 7 a charge 13 of plastic material (heated beforehand), pressing the charge 13 with a mould 14 for imparting to the charge 13 a preliminary shape to the sealing element 4.

In its action, the mould 14 acts on the sealing element 4 firstly at a central region of the sealing element 4, inside the panel 9, and subsequently at an annular region, outside the panel 9.

More specifically, as illustrated in Figures 3a and 3b, the charge 13 of plastic material is firstly pressed in the central part and then the panel 9 is created which moves away from the bottom of the capsule 2.

The panel 9 divides the sealing element into two zones: a radially internal zone and a radially external zone.

For this purpose, the mould 14 is formed by two parts 14a and 14b mutually movable in a straight line.

After obtaining, according to the steps described above, the cap 1' illustrated in Figure 4, the latter is further subjected to a final step of turning the end 11 of the panel 9 in a "U" shape towards the outer edge of the base 6 and with the concavity facing towards the base 6.

It should be noted that, advantageously, the fact that the cap comprises a second end annular 11 facing in the shape of a "U" towards the outer edge of the base 6 and with the concavity facing towards the base 6 ensures that the cap is inserted in the correct manner on the neck of the bottle.

In particular, in use, that is to say, when the cap is applied to the container, it is important that the radially outer wall of the second annular end 11 makes contact with the inner wall of the neck of the bottle, in order to guarantee an optimum seal in any operating condition (in particular under the high pressures which there can be inside the container).

The second annular end 11 facing in the shape of a "U" ensures the deformability and the optimum compression so that there is a perfect adhesion between the sealing element 4 and the neck of the bottle. In effect, the second annular end 11, in contact with the inner wall of the neck of the bottle is deformed (according to a component partly radial and partly directed towards the bottom of the metal capsule 2) and compresses, thereby guaranteeing, in any condition, a perfect seal. In this way, according to the invention, the drawbacks of the prior art relating to the imperfect seals encountered in particular containers are eliminated. This operation, illustrated in Figure 5, is carried out by a punch 15 whilst the sealing element 4, in its preliminary shape illustrated in Figure 4, has cooled, but remains sufficiently flexible to deform in such a way that the mould (punch) withdraws without breaking the plastic (thanks to the preliminary relaxing of the central section).

## Claims

1. A cap for the fermentation in bottles of sparkling wines, comprising a metal capsule (2) and a sealing element (4), which is situated inside the concavity (5) of the capsule (2) and is cup-shaped for collecting the sediments of the wine during the fermentation step in the bottle; the sealing element (4) being shaped and constrained on the capsule (2) for inserting and moulding a plastic material directly inside the concavity (5) of the capsule (2); the sealing element (4) being shaped according to a disc-shaped base (6), adhering to and integral with the bottom (7) of the concavity (5) of the capsule (2), and according to an annular collar (8), which rises from the base (6) for engaging in a sealed fashion with the neck (3) of a bottle, wherein the annular collar (8) is defined by a single annular panel (9) which rises from the base (6), between a first annular end (10) of the panel (9) which is located on the base (6) and a second annular end (11) of the panel (9) which is located in a position distal from the base (6); the cap (1) being **characterised in that** the second annular end (11) faces in the shape of a 'U' towards the outer periphery of the base (6) and with the concavity facing towards the base (6).

2. The crown cap according to any one of the preceding claims, **characterised in that** a layer of paint is interposed between the bottom (7) of the concavity (5) of the capsule (2) and the sealing element (4).

3. The crown cap according to any one of the preceding claims, **characterised in that** the annular collar (8) rises from the base (6) at a predetermined distance (D) from the outer edge of the base (6).

4. The crown cap according to claim 3, **characterised in that** the distance (D) is between 15% and 50% of the diameter of the base (6).

5. A method for the production of a cap according to any one of the preceding claims, and comprising the steps of:
- covering the bottom (7) of the concavity (5) of the capsule (2) with a layer of paint;
- positioning on the bottom (7) of the concavity (5) of the capsule (2) a charge (13) of plastic material;
- pressing the charge (13) with a mould (14);
the method being **characterised in that** it further comprises a step of turning the second end (11) of the panel (9) in a "U" shape towards the periphery.

6. The method according to claim 5, **characterised in that** the mould (14) acts on the sealing element (4) firstly in a central region of the sealing element (4) and then at a peripheral annular region of the sealing element (4).

7. The method according to any one of claims 5 to 6, wherein the crown cap has a plurality of peripheral corrugations.

## Patentansprüche

1. Kronkorken für die Gärung von Schaumwein in Flaschen, umfassend eine Metallkapsel (2) und ein Dichtungselement (4), das sich innerhalb der Konkavität (5) der Kapsel (2) befindet und becherförmig zum Sammeln der Sedimente vom Wein während des Gärschrittes in der Flasche ist; wobei das Dichtungselement (4) an der Kapsel (2) ausgebildet ist und daran festgehalten wird, um ein Kunststoffmaterial direkt in die Konkavität (5) der Kapsel (2) einzuführen und zu formen; wobei das Dichtungselement (4) gemäß einer scheibenförmigen Basis (6), die am Boden (7) der Konkavität (5) der Kapsel (2) haftet und mit diesem einstückig ist, und gemäß einem ringförmigen Kragen (8) ausgebildet ist, der sich von der Basis (6) erhebt, um abdichtend in den Hals (3) einer Flasche einzugreifen, wobei der ringförmige Kragen (8) durch eine einzelne ringförmige Platte (9) definiert ist, die sich von der Basis (6) zwischen einem ersten ringförmigen Ende (10) der Platte (9), das sich auf der Basis (6) befindet, und einem zweiten ringförmigen Ende (11) der Platte (9) erhebt, das sich in einer Position distal von der Basis (6) befindet; wobei der Kronkorken (1) **dadurch gekennzeichnet ist, dass** das zweite ringförmige Ende (11) in Form eines "U" dem Außenumfang der Basis (6) zugewandt ist und mit der der Basis (6) zugewandten Konkavität.

2. Kronkorken nach einem der vorhergehenden Ansprüche, **dadurch gekennzeichnet, dass** eine Farbschicht zwischen dem Boden (7) der Konkavität (5) der Kapsel (2) und dem Dichtungselement (4) angeordnet ist.

3. Kronkorken nach einem der vorhergehenden Ansprüche, **dadurch gekennzeichnet, dass** sich der ringförmige Kragen (8) in einem vorbestimmten Abstand (D) von der Außenkante der Basis (6) von der Basis (6) erhebt.

4. Kronkorken nach Anspruch 3, **dadurch gekennzeichnet, dass** der Abstand (D) zwischen 15% und 50% des Durchmessers der Basis (6) liegt.

5. Verfahren zur Herstellung eines Kronkorkens nach einem der vorhergehenden Ansprüche, und umfassend die Schritte zum:
- Bedecken des Bodens (7) der Konkavität (5) der Kapsel (2) mit einer Farbschicht;
- Positionieren einer Ladung (13) aus Kunststoffmaterial auf dem Boden (7) der Konkavität (5) der Kapsel (2);
- Drücken der Ladung (13) mit einer Form (14);
wobei das Verfahren **dadurch gekennzeichnet ist, dass** es zudem einen Schritt zum Drehen des zweiten Endes (11) der Platte (9) in einer "U"-Form in Richtung des Umfangs umfasst.

6. Verfahren nach Anspruch 5, **dadurch gekennzeichnet, dass** die Form (14) auf das Dichtungselement (4) zunächst in einem zentralen Bereich des Dichtungselements (4) und dann in einem Umfangsringbereich des Dichtungselements (4) einwirkt.

7. Verfahren nach einem der Ansprüche 5 bis 6, wobei der Kronkorken eine Vielzahl an Umfangsriffelungen aufweist.

## Revendications

1. Bouchon pour la fermentation en bouteille de vins mousseux, comprenant une capsule métallique (2) et un élément d'étanchéité (4), qui est situé à l'intérieur de la concavité (5) de la capsule (2) et est en forme de coupe pour recueillir les sédiments du vin pendant l'étape de fermentation en bouteille; l'élément d'étanchéité (4) étant formé et contraint sur la capsule (2) pour insérer et mouler une matière plastique directement à l'intérieur de la concavité (5) de la capsule (2) ; l'élément d'étanchéité (4) étant formé selon une base en forme de disque (6), adhérant au et solidaire du fond (7) de la concavité (5) de la capsule (2), et selon un collier annulaire (8), qui s'élève de la base (6) pour s'engager de manière étanche avec le goulot (3) d'une bouteille, dans lequel le collier annulaire (8) est défini par un seul panneau annulaire (9) qui s'élève de la base (6), entre une première extrémité annulaire (10) du panneau (9) qui est située sur la base (6) et une seconde extrémité annulaire (11) du panneau (9) qui est située dans une position distale par rapport à la base (6) ; le bouchon (1) étant **caractérisé en ce que** la deuxième extrémité annulaire (11) fait face en forme de «U» vers la périphérie extérieure de la base (6) et avec la concavité faisant face vers la base (6).

2. Bouchon couronne selon l'une quelconque des revendications précédentes, **caractérisé en ce qu'**une couche de peinture est interposée entre le fond (7) de la concavité (5) de la capsule (2) et l'élément d'étanchéité (4).

3. Bouchon couronne selon l'une quelconque des revendications précédentes, **caractérisée en ce que** le collier annulaire (8) s'élève de la base (6) à une distance prédéterminée (D) du bord extérieur de la base (6) .

4. Bouchon couronne selon la revendication 3, **caractérisé en ce que** la distance (D) est entre 15% et 50% du diamètre de la base (6).

5. Procédé pour la production d'un bouchon selon l'une quelconque des revendications précédentes, et comprenant les étapes de :
- recouvrir le fond (7) de la concavité (5) de la capsule (2) d'une couche de peinture;
- positionner sur le fond (7) de la concavité (5) de la capsule (2) une charge (13) de matière plastique;
- presser la charge (13) avec un moule (14) ;
le procédé étant **caractérisé en ce qu'**il comprend également une étape de rotation de la deuxième extrémité (11) du panneau (9) en forme de « U » vers la périphérie.

6. Procédé selon la revendication 5, **caractérisé en ce que** le moule (14) agit sur l'élément d'étanchéité (4) d'abord dans une zone centrale de l'élément d'étanchéité (4) et ensuite au niveau d'une zone annulaire périphérique de l'élément d'étanchéité (4).

7. Procédé selon l'une quelconque des revendications de 5 à 6, dans lequel le bouchon couronne présente une pluralité de cannelures périphériques.
